# EUROPÄISCHE PATENTANMELDUNG

(11) **EP 1 059 136 A1**
(43) Veröffentlichungstag der Anmeldung: **13.12.2000**
(21) Anmeldenummer: 00112368.6
(22) Anmeldetag: 09.06.2000
(51) Int. Cl.: B23C 5/10

(54) **Frästichel**

(30) Priorität: 10.06.1999 DE 19926366
(71) Anmelder: Orga Kartensysteme GmbH, 33104 Paderborn (DE)
(72) Erfinder: Isberner, Roland, 24147 Kiel (DE)

(57) **Zusammenfassung**

Die Efindung bezieht sich auf einen Frässtichel zum Fräsen der Formtasche zur Aufnahme eines Chipmoduls in den Kartenkörper einer Chipkarte,
bei dem mindestens der schneidende Teil aus Keramik besteht.

## Beschreibung

Die Erfindung betrifft einen Frässtichel zum Fräsen der Formtasche (diese wird in Fachkreisen auch Kavität genannt; sie dient der Aufnahme eines Chipmoduls) in den Kartenkörper einer Chipkarte. Bisher werden hierfür einschneidige Frässtichel aus Hartmetall verwendet.

Besteht die Chipkarte aus PVC (Polyvenylchlorid), ein im Chipkartenbereich häufig verwendeter Kunststoff, so werden aufgrund der von der Bearbeitung resultierenden relativ hohen Temperaturen Chlor (aus dem PVC) und Wasserstoff (aus der Luftfeuchtigkeit oder dem PVC) freigesetzt und es entsteht Salzsäure. Diese Salzsäure greift den Frässtichel an und vermindert dessen Standzeit erheblich. Im Unterschied zum Fräsen des Kartenkörpers aus PVC ist beim Fräsen einres Kartenkörpers aus anderen Kunststoffen wie z.B. ABS (Acylnitril-Butadien-Styrol-Copolymerisat) oder PE ( Polyethylen) die Standzeit viermal so hoch.

Aufgabe der Erfindung ist es daher, einen Frässtichel zur Bearbeitung der Formtasche zur Aufnahme des Chipmoduls bei Chipkarten zu schaffen, dessen Standzeit wesentlich größer ist als die eines Frässtichels aus Hartmetall.

Diese Aufgabe wird bei einem erfindungsgemäßen Frässtichel dadurch gelöst, daß zumindest sein schneidender Teil aus Keramik besteht.

Bei einer Ausführung hat der Frästichel eine austauschbare Schneidplatte aus Keramik.

Bei einer anderen Ausführung besteht der komplette Frässtichel aus Keramik.

Die beim Fräsen von PVC entstehende Salzsäure greift den Frästichel nicht an, da Keramik von Salzsäure nicht angegriffen wird.

Dieses hat zur Folge, daß die Standzeit eines solchen Frässtichel beim Fräsen von PVC die Größenordnung der Standzeit eines Frässtichels aus Hartmetall beim Fräsen eines anderen Kunststoffes erreicht.

Ein weiterer Vorteil ist, daß mit einem solchen Frässtichel höhere Drehzahlen und damit auch höhere Vorschübe gefahren werden können, so daß die Bearbeitungszeit zusätzlich herabgesetzt wird.

Weitere Vorteile von erfindungsgemäßen Frässticheln sind die Reduzierung der Häufigkeit von Umrüstvorgängen (die Umrüstzeit pro Umrüstvorgang bleibt gleich), so daß es zu weniger Produktionsausfallzeiten kommt und das Einsparen von Werkzeugkosten, da man im Vergleich zu herkömmlichen Hartmetall-Frässticheln bei gleicher Bearbeitungsmenge von Kartenkörpern wesentlich weniger Frässtichel benötig.

Die beigefügten Zeichnungen zeigen folgendes:

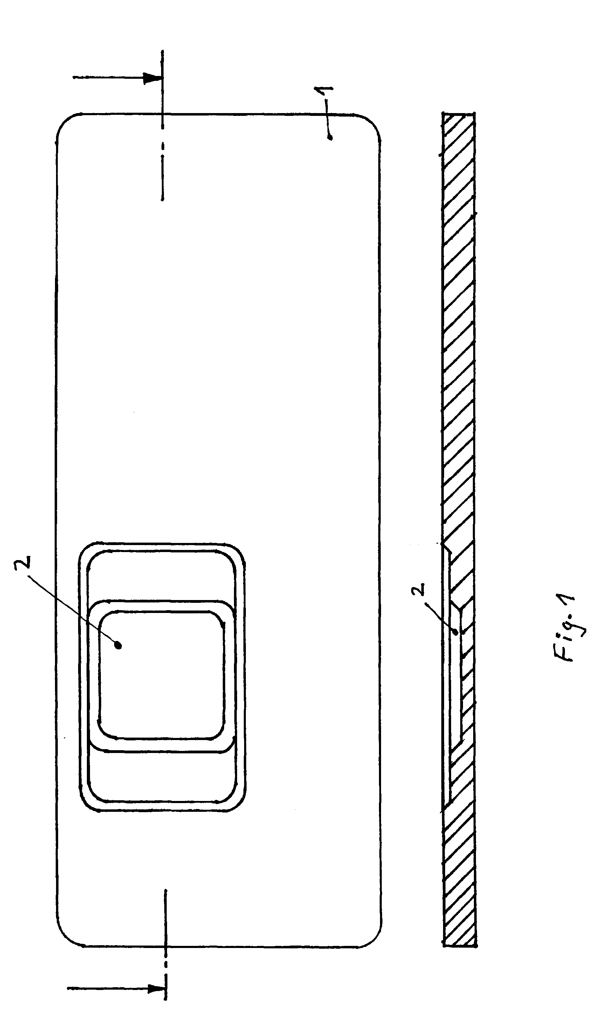

Fig. 1 zeigt einen Chipkartenkörper (1) mit eingefräster zweistufigen Formtasche (2), die zur Aufnahme des Chipmoduls dient in Draufsicht (links) und Vollschnitt (rechts).

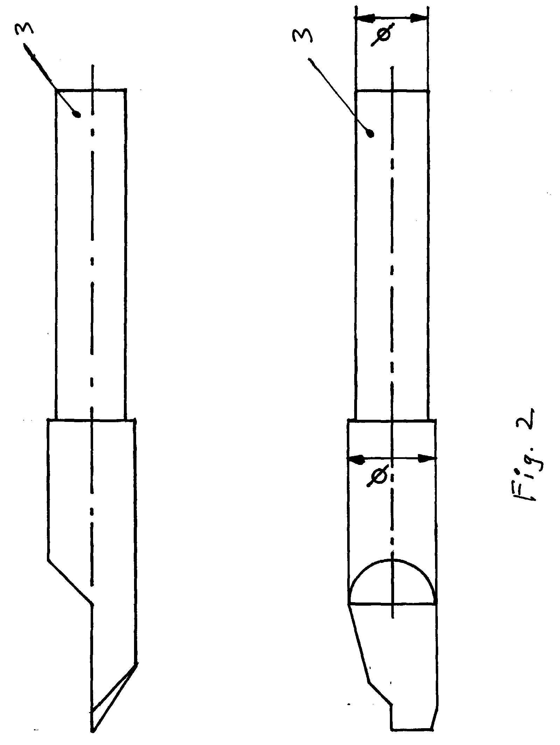

Fig.2 zeigt einen erfindungsgemäßen, einstückigen Frässtichel (3) in Vorderansicht (links) und Draufsicht (rechts), wobei der obere Teil zum Einspannen im Fräsfutter dient und der untere Teil den spanabhebenden Teil beherbergt.

## Patentansprüche

1. Frästichel zum Fräsen einer Formtasche in den Kartenkörper einer Chipkarte,
dadurch gekennzeichnet,
daß zumindest der schneidende Teil des Frässtichels aus Keramik besteht.

2. Frässtichel nach Anspruch 1,
dadurch gekennzeichnet,
daß der gesamte Frässtichel aus Keramik besteht.

3. Frästichel nach Anspruch 1,
dadurch gekennzeichnet,
daß nur der schneidende Teil des Frässtichels in Form einer austauschbaren Schneidplatte aus Keramik und der restliche Teil des Frässtichels aus Stahl oder einem anderen Material besteht.

4. Frästichel nach Anspruch 3,
dadurch gekennzeichnet,
daß die Schneidplatte durch Kleben an dem Frässtichel befestigt wird.

5. Frästichel nach Anspruch 3,
dadurch gekennzeichnet,
daß die Schneidplatte durch Verschrauben an dem Frässtichel befestigt wird.

6. Frästichel nach Anspruch 3,
dadurch gekennzeichnet,
daß die Schneidplatte durch eine Presspassung (Klemmung) an dem Frässtichel befestigt wird.
